(19) Europäisches Patentamt / European Patent Office / Office européen des brevets

(11) EP 4 722 024 A1

(12) **EUROPEAN PATENT APPLICATION**

(43) Date of publication:
08.04.2026 Bulletin 2026/15

(51) International Patent Classification (IPC):
B60L 53/12 (2019.01)     B60L 53/14 (2019.01)
B60L 53/30 (2019.01)     B60L 53/39 (2019.01)

(21) Application number: 24204719.9

(22) Date of filing: 04.10.2024

(52) Cooperative Patent Classification (CPC):
B60L 53/32; B60L 53/12; B60L 53/14; B60L 53/39;
B60L 2240/12; B60L 2240/622

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Evias AB
116 74 Stockholm (SE)

(72) Inventor: Asplund, Gunnar
171 60 Solna (SE)

(74) Representative: Groth & Co. KB
P.O. Box 6107
102 32 Stockholm (SE)

(54) **SYSTEM COMPRISING AT LEAST ONE ELECTRICALLY PROPELLABLE VEHICLE AND METHOD FOR SUCH A SYSTEM**

(57) System comprising electrically propellable road vehicle(s) (6) electrically fed from segmented electric conductors (1) extending along a road section (2). The vehicle(s) comprises GNSS receiver(s) (10) and means for simultaneously determining measurement time and velocity ($v_{meas}$). The system further comprises: vehicle-external power supplies (5a-d), each being connected to one or more conductor segment (3a-f) and being controlled by power supply control means (5), GNSS base station(s) (12) and RTK positioning means configured to determine corrected vehicle position(s) using Real Time Kinematic positioning based on GNSS signals from the GNSS base station(s) and from the vehicle(s). The power supply control means (5) is configured to:

- determine subsequent conductor segment(s) (3f) by comparing the corrected position ($x_{corr}$) with known conductor segment positions ($x_{subseq}$);
- determine an arrival time when the vehicle (6) reaches the subsequent conductor segment(s) (3f) by extrapolation from the corrected position ($x_{corr}$) using the velocity and time lapsed since said measurement time, and
- control vehicle-external power supply/supplies (5a-d) to provide electric power to subsequent conductor segment(s) (3f) at the arrival time.

Fig. 1

EP 4 722 024 A1

## Description

TECHNICAL FIELD

The invention relates to the field of supplying electric power to electrically propellable vehicles for charging and optionally propulsion thereof.

BACKGROUND

Concerns about the environmental impact of combustion of fossil fuels have led to an increased interest in electric vehicles, which have several potential benefits compared to vehicles with conventional internal combustion engines, including a significant reduction of urban air pollution and reduced greenhouse gas emissions.

Presently, electric vehicles are normally charged at stationary charging stations located at parking lots (public or at the home of the vehicle owner) or at rest stops along the highways. Although the latest-generation electric vehicles are provided with high-voltage fast charging technology, charging of the vehicles still takes significantly longer time compared to fuelling a vehicle with fossil fuels. The lengthy charging times also often cause queues at the charging stations during peak hours, thus adding even further to the overall time needed to charge the vehicles.

Furthermore, the expense, weight and limited capacity of the lithium-ion battery packs of today limit widespread use of electric power as the main source of power in heavy vehicles (long haulage trucks and mining vehicles in particular).

WO 2011/123049 proposes complementing the battery of the electric vehicle with electric feeding of the vehicle while driving. A system is disclosed for electric propulsion of a vehicle along a road comprising rail elements/structures having grooves provided with electric conductors therein that may be put under voltage and located in longitudinal tracks or channels in the road. The vehicle is equipped with a current collector which during contact with the electric conductors allows for transfer of electric power between the electric conductors and the vehicle to propel the vehicle and charge its battery set The stretch of road carrying the rail elements is divided into electrically isolated subsequent sections, whereby the electric conductors are only put under voltage when a vehicle with its current collector passes the relevant section.

WO2024052334 discloses a further development of the above-described system wherein the electric conductors are fed by vehicle-external charging devices controlled by charging device control means which control the charging devices based on at least one charge signal from the vehicle(s) indicative of at least one charging parameter comprising a desired charging current for the electric energy storage device of the vehicle.

In systems as described above, it is important both for safety and performance purposes to switch on/off electric power to the electric conductors at the correct position, i.e. to provide electric power to the correct section at the correct time. Therefore, it is important to be able to accurately determine vehicle position.

Using standard Global Navigation Satellite Systems (GNSS) such as GPS does not provide sufficient accuracy.

WO2024052334 proposes to determine vehicle position by means of transmitting an identification signal from the vehicle's current collector to receiving means in the form of short conductor segments or coils arranged at predetermined/known positions of the road. Although this allows the vehicle position to be accurately determined, the additional hardware adds to the cost of the system. Furthermore, the position is only known point wise which makes monitoring and optimization of the overall system more difficult

SUMMARY

An object of the invention is to provide a system and a method which solves or at least improves on the problems described in the background section.

These and other objects are achieved by the present invention by means of a system and a method according to the independent claims.

According to a first aspect of the invention, there is provided a system comprising at least one electrically propellable road vehicle and at least two electric conductors extending along a road section on which the vehicle is adapted to travel in a lengthwise direction thereof, wherein at least one, or preferably each, of the electric conductors is formed by at least two conductor segments arranged consecutively along said lengthwise direction. The at least one electrically propellable vehicle comprises a current collector adapted to connect electrically with said at least two electric conductors. The at least one electrically propellable road vehicle comprises a GNSS receiver for obtaining at least one GNSS signal at the road vehicle and means for simultaneously determining a measurement time and a velocity of the road vehicle. The system further comprises:

- at least two vehicle external power supplies being connected to two or more of the electric conductors, each power supply being connected to one or more conductor segment, and
- power supply control means configured to control the at least one vehicle external power supply,
- at least one GNSS base station provided with a GNSS receiver for obtaining at least one GNSS signal at a fixed base station location, and
- RTK positioning means configured to, for each vehicle, determine a corrected position using Real Time Kinematic correction/positioning based on the at least one GNSS signal from the at least one GNSS base station and on the at least one GNSS signal from the at least one vehicle.

The power supply control means is configured to:

- determine at least one subsequent conductor segment being the first conductor segment or (parallel) segments ahead of the road vehicle as seen in the direction of travel/the lengthwise direction by comparing said corrected position with known positions of said conductor segments;
- determine an arrival time when the road vehicle reaches said subsequent conductor segment or segments by means of extrapolation in the lengthwise direction of the road section from said corrected position using said velocity and time lapsed since said measurement time, and
- control one or more vehicle-external power supplies connected to said subsequent conductor segment or segments to provide electric power to said subsequent conductor segment or segments at said arrival time,

and/or to:

- determine a current position of the vehicle by means of extrapolation in the lengthwise direction of the road section from said corrected position using said velocity and said time lapsed since said measurement time, and
- determine if said current position is within a predetermined range from one or more of the conductor segments, and if so, activate a conductor segment being within said predetermined range (by means of controlling the one or more vehicle-external power supplies connected to the one or more conductor segment to provide electric power thereto).

In other words, the system comprises vehicle(s), one or more, or each, being provided with a GNSS receiver (such as a GPS receiver), and one or more GNSS base stations (such as GPS base stations) arranged at predetermined/known fixed positions which allows the RTK positioning means to determine a corrected position using Real Time Kinematic correction based on at least one GNSS signal (such as at least one GPS signal) from the at least one GNSS base station and on at least one GNSS signal (such as at least one GPS signal) from the at least one vehicle. The RTK positioning means can be arranged on the vehicle(s) or externally to the vehicle(s), for example at, or integrated with, the power supply control means, or at, or integrated with, the GNSS base station. If the RTK positioning means is arranged on the vehicle, there will be a delay in the transmission of the corrected position from the vehicle to the power supply control means. If the RTK positioning means is arranged externally to the vehicle, there will be a delay in the transmission of the GNSS signal (or a signal determined therefrom, such as a position signal) from the vehicle to the RTK positioning means. To compensate for this delay, the power supply control means is configured to extrapolate in the lengthwise direction of the road section (i.e. the direction of travel of the vehicle) from said corrected position using the vehicle velocity and time lapsed since the measurement time (i.e. current time - measurement time) to obtain an arrival time at a subsequent conductor segment and/or a current position of the vehicle (which can be compared with known positions of the conductor segments). Using the determined arrival time and/or current position, conductor segment(s) is/are activated to provide electric power to the vehicle at the correct position and time.

Real Time Kinematic, RTK, correction or positioning is a method well-known in the art and will not be described in further detail here. It is understood that the calculation of the RTK correction may be carried out (and thus the RTK positioning means may be arranged at) either at the base station (in which case GNSS signals are transmitted from the vehicle to the base station, and a corrected position signal is transmitted from the base station to the power supply means), or in the vehicle (in which case GNSS signals are transmitted from the base station to the vehicle, and a corrected position signal is transmitted from the vehicle to the power supply control means), or at the power supply control means (in which case GNSS signals are transmitted from the base station and the vehicle to the power supply control means). The GNSS signals may be described as comprising phase measurement(s) and normally also corresponding time recording(s).

The invention is based on the insight that the since the vehicle is in motion, the inevitable delay in communications between the vehicle and the vehicle-external power supplies means that even if a GNSS position determination is corrected using for example Real Time Kinematic correction, the resulting relatively accurate position is inadequate for activating the conductor segments at the correct time. For example, with a delay time of 30ms (which is the minimum for 4G) and a vehicle velocity of 120km/h, the fault will be one meter which of course is inadequate (and far more than the normal centimeter precision with RTK). To achieve a precision of one cm or less, the delay must be less than 300us. This cannot be met even with 5G (which has a delay of 5ms or more). The invention is further based on the insight to make use of a unique property in an electric road system - that the alignment/lengthwise direction of the conductors is known, and consequently the travel direction of the vehicle is known. This allows a RTK corrected GNSS position determination to be combined with extrapolation in the direction of the conductors based on a measured velocity of the vehicle to achieve a highly accurate current position of the vehicle and/or highly accurate arrival time at a subsequent conductor segment.

In embodiments, the at least one electrically propellable road vehicle is configured to determine its velocity using one or more signals from the GNSS receiver. Alternatively, the at least one electrically propellable road vehicle comprises an odometer and is configured to determine the velocity using the odometer. The measurement time can be determined using one or more signals from the GNSS receiver. Alternatively, the measurement time can be determined using for example a vehicle control unit

In embodiments, the at least two vehicle external power supplies are distributed along the road section in the longitudinal direction thereof, and the GNSS base station is arranged adjacent to a respective vehicle-external power supply. This is advantageous since the GNSS base station is located in close proximity to the road and can furthermore be powered from the vehicle-external power supply. As an example, the GNSS base station(s) may be arranged in a common housing structure as one or more of the vehicle-external power supplies.

In embodiments, the vehicle-external power supplies are charging devices distributed along the road section in the longitudinal direction thereof, the charging devices being configured to provide a voltage and a current adapted for charging an electric storage device of the road vehicle while the road vehicle is travelling. The at least one road vehicle may be configured to transmit at least one charge signal indicative of at least one charging parameter comprising a desired charging voltage and/or charging current for the electric energy storage device of the vehicle, and wherein the power supply control means is configured to, in response to said charge signal, order one or more of the at least one vehicle external power supplies to provide a voltage and/or current to the thereto connected conductor segment or conductor segments corresponding to the charging parameter. Such embodiments are advantageous since the bulky and heavy charging devices are arranged externally to the vehicle instead of on-vehicle, thus increasing the load capacity of the vehicles.

In embodiments, the current collector (of one or more, or each vehicle) is provided with transmitting means and one or more conductor segment is provided with receiving means, wherein the at least one vehicle is configured to transmit a position signal (such as a pulse or an identification signal) to the power supply control means (from the transmitting means to the receiving means). The receiving means is arranged at a predetermined position relative to the respective conductor segment. The power supply control means is furthermore configured to:

- determine an estimated arrival time when the road vehicle is estimated to reach said receiving means by means of extrapolation in the lengthwise direction of the road section from said corrected position using said velocity and time lapsed since said measurement time;
- determine an actual arrival time when the road vehicle reaches said receiving means by detecting when said position signal is received by said receiving means,
- determine a correction factor by comparing the actual and estimated arrival times, and
- apply said correction factor when determining an arrival time when the road vehicle reaches said subsequent conductor segment or segments,

and/or to:

- determine an estimated position of the receiving means by means of extrapolation in the lengthwise direction of the road section from said corrected position using said velocity and time lapsed since said measurement time;
- determine a correction factor by comparing the estimated position and the predetermined position of the receiving means, and
- apply said correction factor when determining a current position of the vehicle.

Such embodiments are advantageous since the accuracy in the determination of arrival time and/or current position may be further improved. These embodiments may be described as a combination of the present invention with the system in WO2024052334. A significant advantage over WO2024052334 alone is that fewer/more sparsely place receiving means can be used (since the transmitting/receiving means are only used for correction), and furthermore that the position can be determined at all times.

According to a second aspect of the invention, there is provided a method for a system comprising at least one electrically propellable road vehicle and at least two electric conductors extending along a road section on which the road vehicle is adapted to travel in a lengthwise direction thereof, wherein at least one of the electric conductors is formed by at least two conductor segments arranged consecutively along said lengthwise direction, wherein the at least one electrically propellable road vehicle comprises a current collector adapted to connect electrically with said at least two electric conductors, the system further comprising at least two vehicle external power supplies being connected to two or more of the electric conductors. The method comprises:

- determining a corrected position of the road vehicle using a GNSS system with real-time kinematic, RTK, correction/positioning,
- simultaneously with said determining a corrected position (or simultaneously with obtaining GNSS signals used for said determining a corrected position), determining a measurement time and a velocity of the road vehicle.

The method furthermore comprises:

- determining at least one subsequent conductor segment being the first conductor segment or segments ahead of the road vehicle as seen in said lengthwise direction by comparing said corrected position with known positions of said conductor segments;
- determining an arrival time when the road vehicle reaches said subsequent conductor segment or segments by means of extrapolation in the lengthwise direction of the road section from at least one previously determined corrected position using time lapsed since the measurement time of the at least one previously determined position and said velocity determined at the at least one previously determined corrected position, and
- controlling one or more vehicle-external power supplies connected to said subsequent conductor segment or segments to provide electric power to said subsequent conductor segment or segments at said arrival time,
- and/or: calculating a current position of the vehicle by means of extrapolation in the lengthwise direction of the road section from at least one previously determined position using time lapsed since the measurement time of the at least one previously determined position and saic velocity determined at the at least one previously determined position, and
- comparing the current position with known positions of the conductor segments, and if said current position is within a predetermined range from any of the conductor segments, activate a conductor segment being within the predetermined range.

According to a third aspect of the invention, there is provided a method for determining a current position of a vehicle travelling along road section in a lengthwise thereof, the method comprising:

- determining a position of the vehicle using GNSS with real-time kinematic ,RTK, positioning, and
- simultaneously with said determining a position, determining a measurement time and a velocity of the vehicle, and
- calculating a current position of the vehicle by means of extrapolation in the lengthwise direction of the road section from at least one previously determined position using time lapsed since the measurement time of the at least one previously determined position and saic velocity determined at the at least one previously determined position.

The features of the embodiments described above are combinable in any practically realizable way to form embodiments having combinations of these features. Further, all features and advantages of embodiments described above with reference to the first aspect of the invention may be applied in corresponding embodiments of the method according to the second and third aspects of the invention and vice versa.

BRIEF DESCRIPTION OF THE DRAWINGS

Above discussed and other aspects of the present invention will now be described in more detail using the appended drawings, which show presently preferred embodiments of the invention, wherein:

fig. 1 shows an embodiment of the system according to the first aspect of the invention, and

fig. 2 shows an embodiment of the method according to the second aspect of the invention.

DETAILED DESCRIPTION

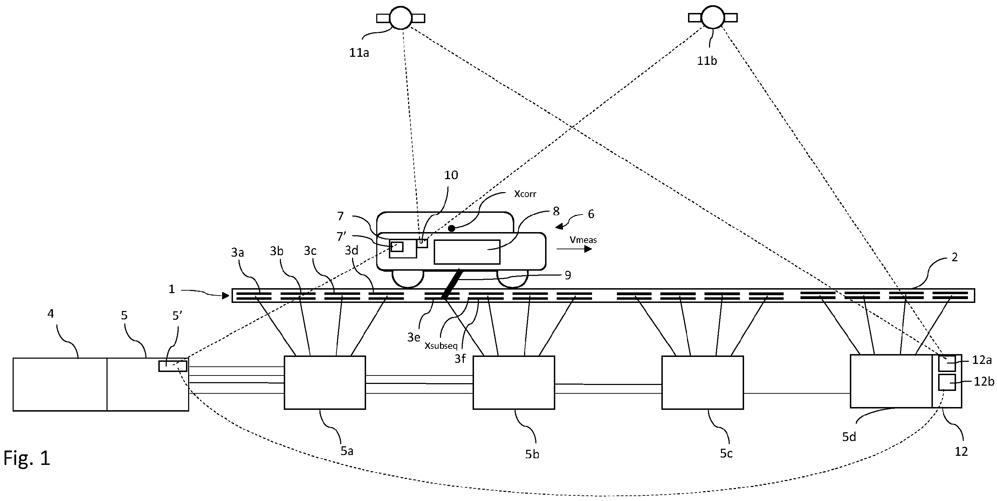

Fig. 1 shows an embodiment of the system according to the first aspect of the invention. The system comprises a pair of electric conductors 1 extending along a road section 2 on which the vehicles travel. The electric conductors are each formed by a plurality of conductor segments (3a-d for example).

The system further comprises at least one electrically propellable vehicle 6 each comprising at least one electric motor (not shown in the figure, typically arranged as hub motors) arranged to propel the vehicle, an electric energy storage device 8 in the form of a battery set electrically connected with the at least one electric motor and a current collector 9 adapted to connect electrically with the at least one electric conductor 1.

The electric conductor and the current collector may be configured as described in WO2021052948 (which is hereby incorporated by reference), i.e. the electric conductor is arranged in a groove in at least one rail element (which may also be referred to as a slotted element), the rail element being located in or on the road section 2. The current collector 9 is displaceable vertically and laterally and comprises at least one contact element being adapted to connect mechanically and electrically with the conductor segments. The at least one rail element is also provided with an additional electric conductor (not shown) being connected to ground potential. The ground conductor may be provided in a separate groove in the rail element, or in the same groove as the electric conductor, or at the top of the rail element (as a ground shield). The current collector comprises at least one ground contact element, each being configured to be brought in electrical and mechanical contact with the ground conductor. The ground conductor is not segmented in this embodiment

The system further comprises, or is connected to, a source of electric power 4, which may be referred to as a transformer station). A set of vehicle-external power supplies being charging devices 5a-d are connected to the source of electric power 4 via power supply control means in the form of a common charging device control unit 5 for all charging devices. In other embodiments, a charging device control unit is provided for each charging device. The charging devices are in turn each connected to four conductor segments (3a-d for example). The source of electric power typically comprises a transformer connected to the electric grid and a rectifier.

Each electrically propellable vehicle (6 for example) comprises vehicle control means in the form of a vehicle control unit 7 provided with wireless communication means 7' which is adapted to connect with communication means 5' of the charging device control unit 5 for instance via GSM/3G/4G/5G to transmit at least one charge signal thereto indicative of at least one charging parameter comprising a desired charging current for the electric energy storage device 8 of the vehicle. The charge signal may correspond to the sum of the maximum allowable charging current of the electric energy storage device of the respective vehicle and a present power required for propulsion of the vehicle.

The charging device control unit 5 is configured to, in response to the charge signal, order the corresponding charging device via the corresponding switch to provide a current to the thereto connected conductor segment corresponding to the desired charging current

The vehicle 6 comprises a GNSS receiver 10 for obtaining, at the road vehicle, at least one GNSS signal (for example from GNSS satellites 11a, 11b). The GNSS receiver is arranged in communication with the vehicle control unit 7. The GNSS receiver or the vehicle control unit is arranged to, simultaneously with the receipt of the at least one GNSS signal, determine corresponding at least one measurement time, $t_{meas}$, and at least one velocity, $v_{meas}$, of the road vehicle. The velocity and the measurement time is determined using the GNSS receiver. In other embodiments where the vehicle comprises an odometer, the vehicle control unit is configured to determine the velocity using the odometer.

The vehicle control unit transmits, via said communication means, at least one GNSS signal comprising at least phase measurements and corresponding (measurement) time recordings, and a velocity signal indicative of the velocity of the road vehicle via its communication means 7'. Measurement time of the velocity measurement may also be transmitted, either as a separate signal or as part of the velocity signal.

The system further comprises at least one GNSS base station 12 provided with a GNSS receiver 12a for obtaining, at a fixed base station location, at least one GNSS signal (for example from GNSS satellites 11a, 11b). The GNSS base station 12 is arranged adjacent to a vehicle-external charging device 5d and may be provided with electric power therefrom. The GNSS base station is furthermore provided with wireless communication means 12b which is adapted to connect with communication means 5' of the charging device control unit 5 for instance via GSM/3G/4G/5G to transmit at least one GNSS signal comprising at least phase measurements and corresponding (measurement) time recordings.

The charging device control unit 5 comprises RTK positioning means/functionality configured to determine a corrected position using Real Time Kinematic positioning based on:

i) the GNSS signal(s) received from the GNSS base station, and
ii) the GNSS signal(s) received from the vehicle.

The charging device control means 5 is configured to, based on said corrected position:

- determine at least one subsequent conductor segment being the first conductor segment or (parallel) segments ahead of the road vehicle as seen in said lengthwise direction by comparing the corrected position $x_{corr}$ with known positions of the conductor segments (for the shown position of the vehicle 6, the subsequent conductor segment is 3f with a position $x_{subseq}$);
- determine an arrival time, $t_{arrive}$, when the road vehicle 6 reaches said subsequent conductor segment or segments 3f by means of extrapolation in the lengthwise direction of the road section 2 from said corrected position using said velocity and time lapsed since said measurement time, and
- control charging device 5b connected to subsequent conductor segment 3f to provide electric power thereto at said arrival time.

The arrival time is thus determined as follows:

$$t_{arrive} = t_{meas} + (x_{subseq} - x_{corr})/v_{meas}$$

The current collector (of one or more, or each vehicle) may be provided with transmitting means in the form of an inductive coil (not shown in fig. 1) and one or more conductor segment is provided with receiving means (also not shown in fig. 1, for example a coil or a separate short conductor segment as disclosed in WO2024052334, which is hereby incorporated by reference), wherein the at least one vehicle is configured to transmit a position signal (such as a pulse or an identification signal) to the power supply control means (from the transmitting means to the receiving means). The receiving means is arranged at a predetermined position relative to the respective conductor segment.

The power supply control means is furthermore configured to:

- determine an estimated arrival time $t_{est}$ when the road vehicle is estimated to reach said receiving means by means of extrapolation in the lengthwise direction of the road section from said corrected position using said velocity and time lapsed since said measurement time;
- determine an actual arrival time $t_{actual}$ when the road vehicle reaches said receiving means by means of detecting when said position signal is (first) received by said receiving means,

- determine a correction factor $C_{corr}$ by comparing the actual and estimated arrival times, and

- apply said correction factor when determining an arrival time when the road vehicle reaches said subsequent conductor segment or segments,

The correction factor may for example be calculated as $C_{corr}=(t_{actual}-t_{meas})/(t_{est}-t_{meas})$.

A corrected arrival time at the subsequent conductor segment(s) is thus determined as follows: $t_{arrive}=t_{meas}+c_{corr}\cdot(x_{subseq}-x_{corr})/v_{meas}$

The correction factor is advantageously regularly updated (whenever the vehicle approaches a conductor segment with receiving means for example).

The charging device control means 5 may alternatively or additionally be configured to:

- determine a current position, $x_{current}$, of the vehicle by means of extrapolation in the lengthwise direction of the road section 2 from said corrected position using said velocity and time lapsed since said measurement time (current time $t_{current}$ - measurement time $t_{meas}$), and

- determine if said current position is within a predetermined range from any of the conductor segments, and if so, control a charging device activate a conductor segment being within said predetermined range.

For the vehicle position shown in fig. 1, this would mean that conductor 3f is activated by charging device 5b for example after the current collector 9 has passed conductor 3e and is within a predetermined range from (i.e. is approaching) conductor 3f.

The current position is thus determined as follows:

$$x_{current} = x_{corr} + v_{meas}\cdot\left( t_{current} - t_{meas}\right)$$

A correction factor may be applied in the determination of the current position in an analogous manner as described above concerning determining the arrival time.

The system is furthermore configured as follows: based on a charge signal transmitted from vehicle control unit 7 via communication means 7' to charging device control means 5, the charging device control means controls charging device 5b to provide the desired charging current conductor to segment 32e and to the subsequent conductor 32f (once activated).

The description above of the system could also be said to illustrate a corresponding embodiment of the method according to the second aspect of the invention, where the method steps correspond to the configuration of the power supply means.

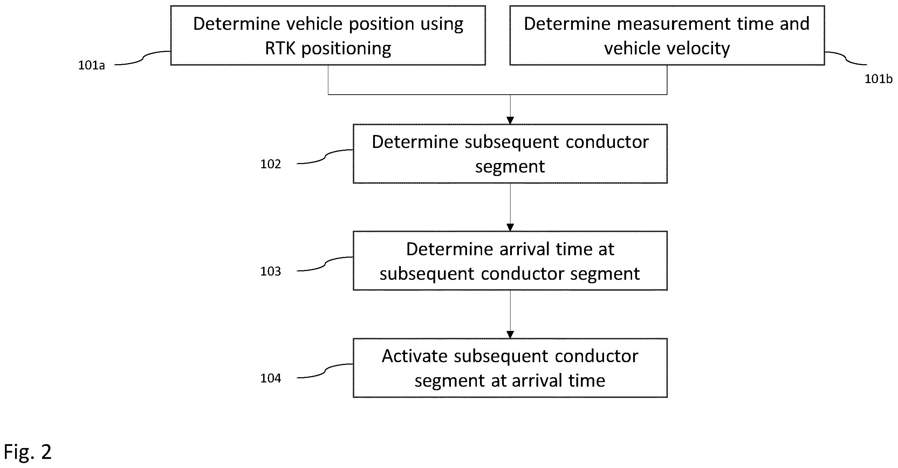

Fig. 2 shows an embodiment of the method according to the second aspect of the invention. The method comprises:

- determining 101a a corrected position of the road vehicle using a GNSS system with real-time kinematic, RTK, correction,

- simultaneously with said determining 101a a position, determining 101b a measurement time and a velocity of the road vehicle.

- determining 102 at least one subsequent conductor segment being the first conductor segment or segments ahead of the road vehicle as seen in said lengthwise direction by comparing said corrected position with known positions of said conductor segments;

- determining 103 an arrival time when the road vehicle reaches said subsequent conductor segment or segments by means of extrapolation in the lengthwise direction of the road section from at least one previously determined corrected position using time lapsed since the measurement time of the at least one previously determined corrected position and said velocity determined at the at least one previously determined corrected position, and

- controlling 104 one or more vehicle-external power supplies connected to said subsequent conductor segment or segments to provide electric power to said subsequent conductor segment or segments at said arrival time.

The description above and the appended drawings are to be considered as non-limiting examples of the invention. The person skilled in the art realizes that several changes and modifications may be made within the scope of the invention. For example, although the system is only illustrated with one vehicle and one GNSS base station, it is understood that it can comprise additional correspondingly configured vehicles and/or GNSS base stations.

**Claims**

1. System comprising at least one electrically propellable road vehicle (6) and at least two electric conductors (1) extending along a road section (2) on which the vehicle is adapted to travel in a lengthwise direction thereof, wherein at least one of the electric conductors is formed by at least two conductor segments (3a-d, 3e-f) arranged consecutively along said lengthwise direction, wherein the at least one electrically propellable vehicle comprises a current collector (9) adapted to connect electrically with said at least two electric conductors (1), wherein the at least one electrically propellable road vehicle comprises a GNSS receiver (10) for obtaining at least one GNSS signal at the road vehicle and means for simultaneously determining a measurement time and a velocity ($v_{meas}$) of the road vehicle; the system further comprising:

- at least two vehicle external power supplies (5a-d) being connected to two or more of the electric conductors (1), each power supply being connected to one or more conductor segment (3a-f), and
- power supply control means (5) configured to control the at least one vehicle external power supply (5a-d),
- at least one GNSS base station (12) provided with a GNSS receiver (12a) for obtaining at least one GNSS signal at a fixed base station location,
- RTK positioning means configured to, for each vehicle, determine a corrected position ($x_{corr}$) using Real Time Kinematic correction based on the at least one GNSS signal from the at least one GNSS base station (12) and on the at least one GNSS signal from the at least one vehicle (6),

wherein the power supply control means (5) is configured to:

- determine at least one subsequent conductor segment (3f) being the first conductor segment or segments ahead of the road vehicle (6) as seen in said lengthwise direction by comparing said corrected position ($x_{corr}$) with known positions of said conductor segments ($x_{subseq}$);
- determine an arrival time when the road vehicle (6) reaches said subsequent conductor segment or segments (3f) by means of extrapolation in the lengthwise direction of the road section from said corrected position ($x_{corr}$) using said velocity ($v_{meas}$) and time lapsed since said measurement time, and
- control one or more vehicle-external power supplies (5a-d) connected to said subsequent conductor segment or segments (3f) to provide electric power to said subsequent conductor segment or segments at said arrival time, and/or to:
- determine a current position ($x_{current}$) of the vehicle by means of extrapolation in the lengthwise direction of the road section from said corrected position ($x_{corr}$) using said velocity ($v_{meas}$) and said time lapsed since said measurement time, and
- determine, by comparing said current position ($x_{current}$) with known positions ($x_{subseq}$) of said conductor segments, if said current position is within a predetermined range from one or more of the conductor segments, and if so, controlling one or more vehicle-external power supply to provide electric power to the one or more conductor segments being within the predetermined range.

2. System according to claim 1, wherein said at least two vehicle external power supplies (5a-d) are distributed along the road section (2) in the longitudinal direction thereof, and wherein said at least one GNSS base station (12) is arranged adjacent to a respective vehicle-external power supply (5d).

3. System according to any of the preceding claims, wherein said at least one electrically propellable road vehicle (6) comprises an odometer and is configured to determine said velocity using said odometer.

4. System according to any of the preceding claims, wherein said vehicle-external power supplies (5) are charging devices distributed along the road section in the longitudinal direction thereof, the charging devices being configured to provide a voltage and a current adapted for charging an electric storage device of the road vehicle while the road vehicle is travelling.

5. System according to claim 4, wherein the at least one road vehicle (6) is configured to transmit at least one charge signal indicative of at least one charging parameter comprising a desired charging voltage and/or charging current for the electric energy storage device (8) of the vehicle, and wherein the power supply control means (5) is configured to, in response to said charge signal, order one or more of the at least one vehicle external power supplies to provide a voltage and/or current to the thereto connected conductor segment or conductor segments corresponding to the charging parameter.

6. System according to any of the preceding claims, wherein said RTK positioning means is part of, or arranged at, said power supply control means (5), or is part of, or arranged at, said at least one GNSS base station (12).

7. System according to any of the preceding claims, wherein said current collector is provided with transmitting means and wherein at least one conductor segment is provided with receiving means, wherein the at least one vehicle is configured to transmit a position signal Gto the power supply control means via said transmitting means and said receiving means, wherein the receiving means is arranged at a predetermined position relative to the conductor segment, and wherein the power supply control means is configured to:

- determine an estimated arrival time when the road vehicle (6) reaches said receiving means by means of extrapolation in the lengthwise direction of the road section from said corrected position ($x_{corr}$) using said velocity ($v_{meas}$) and time lapsed since said measurement time;
- determine an actual arrival time when the road vehicle (6) reaches said receiving means by means of detecting when said position signal is received by said receiving means,
- determine a correction factor by comparing the actual and estimated arrival times, and
- apply said correction factor when determining an arrival time when the road vehicle (6) reaches said subsequent conductor segment or segments (3f),

and/or to:

- determine an estimated position of the receiving means by means of extrapolation in the lengthwise direction of the road section from said corrected position ($x_{corr}$) using said velocity ($v_{meas}$) and time lapsed since said measurement time;
- determine a correction factor by comparing the estimated position and the predetermined position of the receiving means, and
- apply said correction factor when determining a current position ($x_{current}$) of the vehicle.

8. Method for a system comprising at least one electrically propellable road vehicle and at least two electric conductors extending along a road section on which the road vehicle is adapted to travel in a lengthwise direction thereof, wherein at least one of the electric conductors is formed by at least two conductor segments arranged consecutively along said lengthwise direction, wherein the at least one electrically propellable road vehicle comprises a current collector adapted to connect electrically with said at least two electric conductors, the system further comprising at least two vehicle external power supplies being connected to two or more of the electric conductors, each power supply being connected to one or more conductor segment the method comprising:

- determining (101a) a position of the road vehicle using a GNSS system with real-time kinematic, RTK, positioning, and
- simultaneously with said determining a position, determining (101b) a measurement time and a velocity of the road vehicle,
- the method further comprising:determining (102) at least one subsequent conductor segment being the first conductor segment or segments ahead of the road vehicle as seen in said lengthwise direction by comparing said position with known positions of said conductor segments;
- determining (103) an arrival time when the road vehicle reaches said subsequent conductor segment or segments by means of extrapolation in the lengthwise direction of the road section from at least one previously determined position using time lapsed since the measurement time of the at least one previously determined position and said velocity determined at the at least one previously determined position, and
- controlling (103) one or more vehicle-external power supplies connected to said subsequent conductor segment or segments to provide electric power to said subsequent conductor segment or segments at said arrival time,

and/or:

- determining a current position of the vehicle by means of extrapolation in the lengthwise direction of the road section from at least one previously determined position using time lapsed since the measurement time of the at least one previously determined position and said velocity determined at the at least one previously determined position, and
- comparing the current position with known positions of the conductor segments, and if said current position is within a predetermined range from one or more of the conductor segments, controlling one or more vehicle-external power supplies to provide electric power to the one or more conductor segments being within the predetermined range.

9. Method according to claim 8, wherein said velocity of the vehicle is determined using a vehicle odometer.

10. Method according to claim 8, wherein said velocity of the vehicle is determined using GNSS.

11. Method according to any of claims 8-10, wherein said at least two vehicle external power supplies are distributed along the road section in the longitudinal direction thereof, and wherein said GNSS system with RTK positioning comprises at least one GNSS base station arranged adjacent to a respective vehicle-external power supply

12. Method according to any of claims 8-11, wherein said vehicle-external power supplies are charging devices distributed along the road section in the longitudinal direction thereof, the charging devices being configured to provide a voltage and a current adapted for charging an electric storage device of the road vehicle while the road vehicle is travelling.

**13.** Method according to claim 12, further comprising

- determining a desired charging voltage and/or current for one or more of the at least one electrically propellable road vehicle, and
- ordering one or more of the charging devices to provide a voltage and/or current to the thereto connected conductor segment or conductor segments corresponding to the desired charging voltage and/or current

**14.** Method according to any of claims 8-13, wherein said current collector is provided with transmitting means and wherein at least one conductor segment is provided with receiving means, wherein the at least one vehicle is configured to transmit a position signal to the power supply control means via said transmitting means and said receiving means, wherein the receiving means is arranged at a predetermined position relative to the conductor segment, the method further comprising:

- determining an estimated arrival time when the road vehicle reaches said receiving means by means of extrapolation in the lengthwise direction of the road section from said corrected position using said velocity and time lapsed since said measurement time;
- determining an actual arrival time when the road vehicle reaches said receiving means by means of detecting when said position signal is received by said receiving means,
- determining a correction factor by comparing the actual and estimated arrival times, and
- applying said correction factor when determining (103) an arrival time,

and/or:

- determining an estimated position of the receiving means by means of extrapolation in the lengthwise direction of the road section from said corrected position ($x_{corr}$) using said velocity ($v_{meas}$) and time lapsed since said measurement time;
- determining a correction factor by comparing the estimated position and the predetermined position of the receiving means, and
- applying said correction factor when determining a current position of the vehicle.

**15.** Method for determining a current position of a vehicle travelling along road section in a lengthwise thereof, the method comprising:

- determining a position of the vehicle using GNSS with real-time kinematic ,RTK, positioning, and

- simultaneously with said determining a position, determining a measurement time and a velocity of the vehicle, and
- calculating a current position of the vehicle by means of extrapolation in the lengthwise direction of the road section from at least one previously determined position using time lapsed since the measurement time of the at least one previously determined position and saic velocity determined at the at least one previously determined position.

Fig. 1

```
┌─────────────────────────────┐   ┌─────────────────────────────┐
│  Determine vehicle position │   │  Determine measurement time │
│      using RTK positioning  │   │      and vehicle velocity   │
└─────────────────────────────┘   └─────────────────────────────┘
         101a                                        101b
```

┌─────────────────────────────┐
│   Determine subsequent       │
│     conductor segment        │
└─────────────────────────────┘
            102

┌─────────────────────────────┐
│    Determine arrival time at │
│  subsequent conductor segment│
└─────────────────────────────┘
            103

┌─────────────────────────────┐
│   Activate subsequent        │
│  conductor segment at arrival│
│            time              │
└─────────────────────────────┘
            104

Fig. 2

Europäisches
Patentamt

European
Patent Office

Office européen
des brevets

# EUROPEAN SEARCH REPORT

**Application Number**

EP 24 20 4719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/297544 A1 (ZETHRAEUS DAN [SE] ET AL) 22 September 2022 (2022-09-22) * paragraphs [0033], [0045] - [0047], [0054] - [0056], [0060]; figures 1,2 * ----- | 1-15 | INV. B60L53/12 B60L53/14 B60L53/30 B60L53/39 |
| A | US 2021/331593 A1 (ZETHRAEUS DAN [SE] ET AL) 28 October 2021 (2021-10-28) * paragraphs [0041] - [0044]; figures 1,2 * ----- | 1,2,4, 11,12 | |
| Y | US 2024/025285 A1 (LANG HOWARD L [US] ET AL) 25 January 2024 (2024-01-25) * paragraph [0026] * ----- | 1-15 | |

**TECHNICAL FIELDS SEARCHED (IPC)**

B60L

The present search report has been drawn up for all claims

| Place of search | Date of completion of the search | Examiner |
|---|---|---|
| The Hague | 21 February 2025 | Bellatalla, Filippo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4719

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2025

| Patent document cited in search report | | | Publication date | Patent family member(s) | | | Publication date |
|---|---|---|---|---|---|---|---|
| US | 2022297544 | A1 | 22-09-2022 | AU | 2020291791 | A1 | 25-11-2021 |
| | | | | CN | 113874242 | A | 31-12-2021 |
| | | | | EP | 3983255 | A1 | 20-04-2022 |
| | | | | EP | 4197846 | A1 | 21-06-2023 |
| | | | | ES | 2970061 | T3 | 24-05-2024 |
| | | | | JP | 7312862 | B2 | 21-07-2023 |
| | | | | JP | 2022536912 | A | 22-08-2022 |
| | | | | SE | 1950714 | A1 | 29-09-2020 |
| | | | | US | 2022297544 | A1 | 22-09-2022 |
| | | | | WO | 2020249680 | A1 | 17-12-2020 |
| US | 2021331593 | A1 | 28-10-2021 | CN | 108602453 | A | 28-09-2018 |
| | | | | CN | 114132191 | A | 04-03-2022 |
| | | | | DK | 3436303 | T3 | 30-01-2023 |
| | | | | EP | 3436303 | A1 | 06-02-2019 |
| | | | | EP | 4129754 | A1 | 08-02-2023 |
| | | | | ES | 2940193 | T3 | 04-05-2023 |
| | | | | US | 2019111799 | A1 | 18-04-2019 |
| | | | | US | 2021331593 | A1 | 28-10-2021 |
| | | | | US | 2024351456 | A1 | 24-10-2024 |
| | | | | WO | 2017167727 | A1 | 05-10-2017 |
| US | 2024025285 | A1 | 25-01-2024 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011123049 A
- WO 2024052334 A
- WO 2021052948 A